# FASCICULE DE BREVET EUROPEEN

(11) **EP 0 890 065 B1**
(45) Date de publication et mention de la délivrance du brevet: **26.09.2001**
(21) Numéro de dépôt: 97919455.2
(22) Date de dépôt: 01.04.1997
(51) Int. Cl.: F25D 16/00, F28D 20/02

(54) **ACCUMULATEUR DE CAPACITE FRIGORIFIQUE**
KÄLTESPEICHER
REFRIGERATION CAPACITY ACCUMULATOR

(30) Priorité: 29.03.1996 FR 9603926
(43) Date de publication de la demande: 13.01.1999
(73) Titulaire: Nguyen Viet, Thai, 27630 Ecos (FR)
(72) Inventeur: Nguyen Viet, Thai, 27630 Ecos (FR)
(74) Mandataire: Degret, Jacques
(86) Numéro de dépôt international: FR9700580
(87) Numéro de publication internationale: WO9737176

(56) Documents cités:
- WO-A-90/09554
- DE-A- 4 108 370
- GB-A- 2 017 292
- US-A- 4 223 721
- US-A- 4 388 963
- US-A- 4 856 296
- PATENT ABSTRACTS OF JAPAN vol. 8, no. 73 (M-287) [1510] , 5 Avril 1984 & JP 58 219396 A (MATSUSHITA DENKI SANGYO K.K.), 20 Décembre 1983,

## Description

La présente invention concerne un accumulateur de capacité frigorifique et un procédé mettant en oeuvre ledit accumulateur et consistant à accumuler une capacité frigorifique et à restituer ladite capacité frigorifique.

On connaît des systèmes d'accumulation frigorifique qui sont constitués par des accumulateurs à faisceaux multitubulaires dont les tubes sont plongés dans des bassins d'eau limpide. La mise en oeuvre de tels accumulateurs nécessite l'utilisation de deux liquides dynamiques au minimum : un liquide primaire circulant à l'intérieur des tubes et un liquide secondaire circulant à l'extérieur et autour des tubes.

En mode "Charge" de l'accumulateur, on fait circuler le liquide primaire à une température négative, provenant d'un groupe frigorifique, à l'intérieur des tubes desdits faisceaux afin de créer, avec le liquide secondaire circulant à l'extérieur des tubes, une couche de glace autour de ces tubes.

En mode "Décharge", on arrête le groupe frigorifique et la fusion de la couche de glace créée autour des tubes refroidit le liquide secondaire qui est dirigé, grâce à une station de pompage, vers les points d'utilisation.

Cette technologie très répandue présente l'inconvénient d'obliger à décharger complètement l'accumulateur, c'est-à-dire à faire fondre toute la glace générée autour des tubes, entre chaque cycle de "Charge - Décharge". En effet, une couche de glace résiduelle, même faible, en cas de fusion incomplète, constitue un véritable écran isothermique, qui gêne l'échange de chaleur entre les fluides primaire et secondaire. De ce fait, le transfert thermique ne peut être obtenu convenablement et une nouvelle phase de production de glace ne peut commencer. Or, il est impossible de prévoir à l'avance avec précision les besoins thermiques dans la plupart des cas ; et, cependant, la fusion de la glace doit être totale sous peine de provoquer des dommages irréversibles sur les groupes frigorifiques.

Les performances irrégulières de ces appareils font qu'il s'avère nécessaire d'ajouter un troisième circuit de refroidissement afin de maintenir une certaine constante dans le processus. En effet, au fur et à mesure de la fusion de la glace, la section des tubes du faisceau, diamètre "tube + glace", diminue et influence les résultats. La perte de charge et les surfaces d'échange du fluide secondaire traversant le faisceau varient considérablement entre le début et la fin du cycle de refroidissement.

Par ailleurs, le fluide secondaire doit être oxygéné en permanence, en mode "Charge", pour permettre une formation homogène et régulière de la glace autour des tubes.

Le fait d'employer obligatoirement deux liquides dynamiques, primaire et secondaire, ainsi qu'un troisième circuit supplémentaire afin de maintenir une certaine constante dans le processus, et enfin un quatrième circuit pour oxygéner le liquide secondaire, exige une mise en oeuvre lourde ainsi que des technologies complexes pour contrôler l'exploitation du système.

Du point de vue investissement, ces technologies nécessaires peuvent bien souvent annuler l'économie que constitue l'accumulation frigorifique par stockage de glace.

De plus, ces systèmes connus ne peuvent être directement utilisés avec un liquide secondaire sous pression, à cause de l'oxygénation indispensable pendant la phase de production de glace.

La présente invention vise non seulement à pallier les inconvénients de ces systèmes connus, mais également à obtenir une nette amélioration de la capacité (plus de masse de glace par m³ d'encombrement) et des performances (m² surface d'échange), ainsi qu'une simplification extrême de la mise en oeuvre.

A cet effet, l'invention a donc pour premier objet un accumulateur de capacité frigorifique, du type comprenant un ensemble de tubes accumulateurs disposé dans une enceinte isothermique, lesdits tubes étant espacés et maintenus sensiblement parallèles les uns aux autres, chaque tube dudit ensemble étant fermé à ses extrémités et contenant un liquide primaire statique capable de se transformer en glace lors d'un refroidissement par un fluide secondaire frigorifique et/ou de refroidir un liquide secondaire, dit d'utilisation, le fluide et/ou liquide secondaire circulant entre les tubes, à l'extérieur de ceux-ci, la circulation dans l'enceinte du produit secondaire ou des deux produits secondaires se faisant entre une entrée et une sortie situées à deux extrémités opposées de ladite enceinte, ledit accumulateur étant caractérisé en ce que (a) chaque tube est fermé à chacune de ses deux extrémités par une paroi intérieurement concave, (b) chaque tube réserve un espace d'expansion entre le liquide primaire et sa paroi cylindrique, et (c) chaque tube est disposé horizontalement dans l'enceinte.

Selon une première construction particulièrement avantageuse, chaque paroi d'extrémité d'un tube accumulateur est hémisphérique.

Toujours selon une construction avantageuse, les tubes accumulateurs sont disposés dans l'enceinte transversalement à la direction de circulation du produit secondaire ou des deux produits secondaires.

Dans une forme préférée de réalisation, les tubes accumulateurs sont disposés de façon à former des nappes superposées et espacées, les tubes étant décalés transversalement d'une nappe à l'autre de façon à contraindre le produit secondaire à circuler à travers les espaces en zigzaguant autour des tubes et d'une nappe à l'autre.

Le liquide primaire statique contenu dans chaque tube peut par exemple être soit de l'eau, soit de l'eau dosée en sels NaCl, soit une autre solution eutectique.

Selon encore une autre construction avantageuse, la paroi de chaque tube est métallique.

Selon encore une autre variante, l'enceinte isothermique peut être fermée de sorte que le fluide secondaire frigorifique utilisé soit un gaz.

Il est connu des brevets US-A-4.388.963 et US-A-4.856.296 de réaliser des installations de stockage de chaleur et des installations de stockage de froid, notamment à des fins de climatisation, qui utilisent des batteries de tubes fermés à chacune de leurs deux extrémités par une paroi intérieure sensiblement concave, chacun de tels tubes enfermant un liquide tel que l'eau, chaude ou froide selon la destination des installations, voire de la glace.

Cependant, chacun de tels tubes est en matière plastique, matériau dont on sait que le coefficient de transfert thermique exprimé en Kcal/m/°K est de l'ordre de 200 fois inférieur à celui des métaux et notamment de l'acier.

Les tubes connus des deux documents de l'art antérieur précités ne sont donc pas aptes à remplir le même rôle que le tube objet de la présente invention, à savoir celui de voir l'état du liquide primaire statique que ledit tube contient se transformer le plus rapidement possible en passant de l'état liquide à l'état solide en mode "charge", et inversement en mode "décharge", de façon à offrir une très importante capacité de refroidissement du liquide secondaire extérieur au tube selon l'invention, même en cas de pointes en besoin de froid.

Pour parvenir à une telle fin, il est éminemment préférable que le matériau dans lequel chaque tube est construit favorise l'échange thermique, ce qui n'est pas le cas des matières plastiques.

Préférentiellement, chacun des tubes selon l'invention a un diamètre d'environ 10 centimètres et une longueur comprise entre environ 1 mètre et environ 6 mètres.

La présente invention a pour deuxième objet un procédé d'accumulation d'une capacité frigorifique et de restitution de ladite capacité frigorifique mettant en oeuvre l'accumulateur selon l'invention, ledit procédé étant caractérisé en ce qu'il consiste à faire circuler un fluide secondaire frigorifique entre les tubes disposés horizontalement, à l'extérieur de ceux-ci, afin de refroidir le liquide primaire statique contenu dans chaque tube et/ou à faire circuler un liquide secondaire, dit d'utilisation, entre lesdits tubes disposés horizontalement, à l'extérieur de ceux-ci, afin de refroidir ledit liquide secondaire d'utilisation sous l'effet du liquide primaire statique.

Avantageusement, selon ce procédé, la circulation entre les tubes du fluide secondaire frigorifique et/ou du liquide secondaire d'utilisation se fait transversalement à la direction générale selon laquelle lesdits tubes s'étendent.

Dans une autre forme de mise en oeuvre particulièrement intéressante de ce procédé, le fluide secondaire frigorifique et le liquide secondaire d'utilisation circulant entre les tubes représentent un même et unique fluide et un distributeur règle la circulation de ce fluide unique en mode "charge", en mode "décharge" ou en mode "mixte".

D'autres caractéristiques et avantages de l'invention apparaîtront au cours de la description qui va suivre, faite en référence aux dessins annexés qui, à titre d'exemple non limitatif. illustrent plusieurs formes de réalisations.

La Figure 1 est une vue schématique en coupe axiale d'un tube accumulateur faisant partie de l'accumulateur suivant l'invention.

La Figure 2 est une vue schématique en coupe de l'accumulateur suivant l'invention utilisant un assemblage de tubes accumulateurs du type illustré sur la figure 1, ces tubes étant vus en élévation.

La Figure 3 est une vue en coupe transversale à échelle agrandie du tube accumulateur de la figure 1 en cours de fusion du liquide solidifié.

La Figure 4 est un schéma fluidique d'un système de refroidissement d'un fluide au moyen d'un accumulateur suivant l'invention avec possibilité d'un fonctionnement en mode "charge", "décharge" ou "mixte".

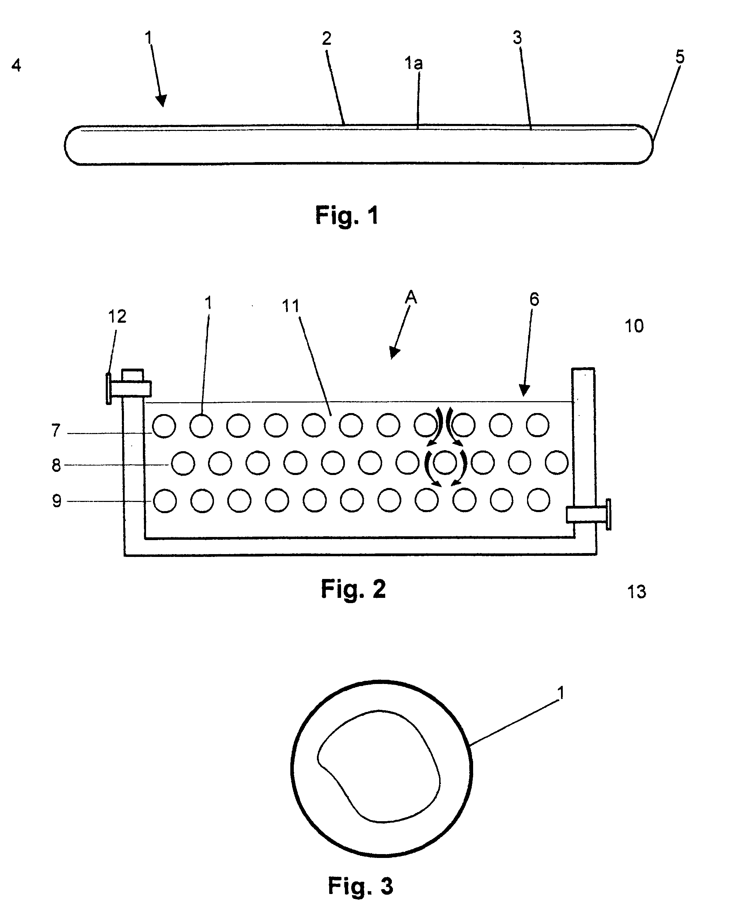

Chaque tube accumulateur 1 de l'accumulateur A suivant l'invention illustré sur la figure 1 comporte une paroi 2, par exemple métallique, contenant un liquide statique 3, par exemple de l'eau ou encore de l'eau dosée en sels NaCl ou toute autre solution eutectique, capable de se solidifier lorsque le tube accumulateur 1 est exposé à un fluide frigorifique à température négative.

Le tube accumulateur 1 est cylindrique et il est fermé à chaque extrémité 4, 5 par une paroi intérieurement concave, par exemple hémisphérique. Un espace d'expansion 1a est réservé entre le liquide statique 3 et la paroi cylindrique du tube accumulateur 1. Avec une disposition horizontale du tube accumulateur 1, ledit espace d'expansion 1a et lesdites parois 4, 5 intérieurement concaves (par exemple hémisphériques) constituent un moyen pour compenser l'effet d'expansion du liquide statique 3 en cours de solidification.

L'accumulateur A suivant l'invention illustré sur la Figure 2 comprend un ensemble compact 6 de tubes accumulateurs 1 maintenus transversalement écartés entre eux de façon sensiblement parallèle, formant ainsi des nappes de tubes 7, 8 et 9. Ces nappes sont à leur tour assemblées de façon à décaler les tubes les uns des autres, d'une nappe à l'autre comme illustré. Les tubes 1 s'étendent perpendiculairement au plan du dessin.

Cet ensemble 6 de tubes accumulateurs 1 est monté dans une enceinte isothermique 10 contenant un fluide frigorifique 11 à température négative dans lequel les tubes sont immergés. Une entrée 12 et une sortie 13 sont prévues respectivement en haut et en bas de l'enceinte 10 afin de faire circuler ce fluide frigorifique 11 depuis l'entrée 12 jusqu'à la sortie 13, à travers les espaces entre les tubes accumulateurs 1 de l'ensemble 6 et autour desdits tubes 1 qui sont maintenus dans l'enceinte par des moyens appropriés. On comprendra que, si le fluide 11 est un gaz, l'enceinte doit être fermée. Lorsque ce fluide 11 est un liquide tel que l'eau, celle-ci sera bien entendu additionnée d'un antigel. La disposition des tubes illustrée sur la Figure 3 oblige le fluide 11 à zigzaguer à travers les nappes de tubes 1, comme indiqué par les flèches, en contact direct avec lesdits tubes 1, ce qui améliore notablement l'échange thermique.

L'accumulateur A qui vient d'être décrit fonctionne de la manière suivante.

En mode "charge", l'entrée 12 et la sortie 13 sont connectées avec un groupe frigorifique et on fait circuler dans l'enceinte le fluide 11 à température négative. Le liquide statique 3 se refroidit, il passe de l'état liquide à l'état solide et il se transforme en glace en commençant par la périphérie jusqu'au coeur du tube. L'accumulateur A est alors prêt à refroidir un liquide d'utilisation que l'on fait circuler à travers lesdits espaces entre les tubes 1 et autour des tubes, le refroidissement du fluide d'utilisation étant obtenu grâce à la chaleur latente de fusion de la glace.

En mode "décharge", l'entrée 12 et la sortie 13 sont connectées avec une installation d'utilisation du fluide 11 externe afin de refroidir cette installation. La fusion de la glace à l'intérieur des tubes accumulateurs 1 fournit la capacité frigorifique nécessaire à cet effet. Cette fusion commence sur la périphérie du tube accumulateur et se propage vers le centre.

En mode "mixte", l'entrée 12 et la sortie 13 sont connectées simultanément sur le groupe frigorifique et sur l'installation d'utilisation externe. La production frigorifique s'ajoute alors à la "décharge" de l'ensemble des tubes, ce qui accroît considérablement la capacité totale de refroidissement disponible. Ce fonctionnement en simultané n'est possible que grâce au fait que la fusion et la solidification à l'intérieur du tube accumulateur se produisent de façon parallèle, c'est-à-dire de l'extérieur du tube vers l'intérieur, au coeur du tube.

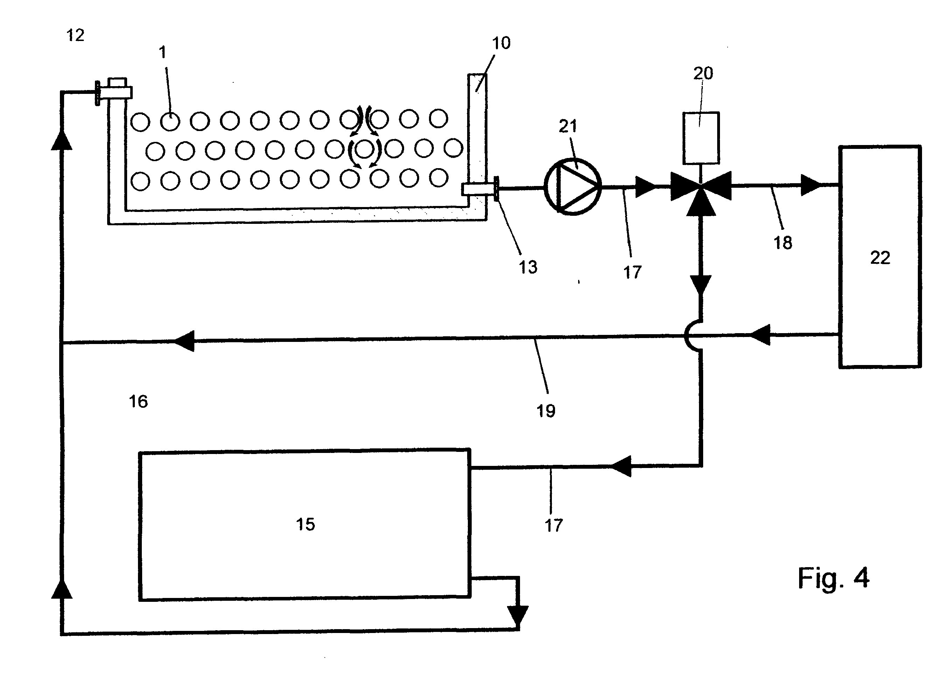

Le schéma de la Figure 4 illustre très bien un tel fonctionnement en mode "mixte".

Le système illustré sur la Figure 4 comprend l'accumulateur A suivant l'invention connecté d'une part à un groupe frigorifique 15, par les conduits 16 et 17, et d'autre part à une ou plusieurs installations d'utilisation externes 22, par les conduits 17-18 et 19-16. Un distributeur 20 règle la circulation dans les différents conduits et une pompe 21 permet de pousser le fluide 11 dans les différents conduits.

On comprend que, grâce au distributeur 20, on peut faire fonctionner l'ensemble du système seulement en mode "charge", seulement en mode "décharge" ou les deux à la fois, c'est-à-dire en mode "mixte". Ces trois modes de fonctionnement sont indiqués par les flèches dans le schéma de la Figure 4.

L'invention présente de nombreux avantages.

Le liquide statique 3 dans le procédé de l'invention est isolé par les tubes fermés du fluide frigorifique en mode "charge", et du fluide à réfroidir en mode "décharge". Par conséquent, la performance de l'accumulateur est constante jusqu'à la fusion complète de la glace dans les tubes, la qualité de l'échange thermique restant constante tant qu'il y aura de la glace dans ces tubes.

La fusion du liquide solidifié s'effectue de l'extérieur vers l'intérieur des tubes, et la solidification dudit liquide s'effectue dans le même sens. De ce fait, il est tout à fait possible de "charger" à tout moment l'accumulateur d'une manière simple et homogène, même au cours d'un cycle de "décharge", en utilisant le groupe frigorifique en simultané. Ceci représente une capacité de refroidissement très important mise à tout moment à la disposition de l'utilisateur pour effacer les pointes en besoins de froid.

La forme des tubes, ronde de section et longiligne, fournit la plus grande masse de liquide solidifiable pour un volume donné attribué à l'accumulateur. A titre d'exemple, ces tubes peuvent avoir un diamètre d'environ 10 centimètres et une longueur entre environ 1 mètre et 6 mètres ou plus.

La forme des tubes et leur disposition fournit le meilleur échange thermique entre les tubes et le fluide environnant, tout en créant une perte de charge minimale et constante sur ledit fluide circulant à l'extérieur des tubes.

Le fait que les tubes soient fermés, sans aucune nécessité de les relier à un réseau quelconque, facilite notablement l'étude et la réalisation d'un système frigorifique à accumulation. Les besoins en capacité frigorifique déterminent simplement le nombre et la longueur des tubes à installer. La fabrication et le montage des tubes sont très simples et permettent toutes configurations imaginables.

La mise en oeuvre d'un accumulateur selon l'invention et son raccordement à une installation d'utilisation du fluide 11 est très simple puisqu'un seul circuit est nécessaire, car le procédé fonctionne avec un seul fluide dynamique.

Ledit fluide 11 peut être sous forme d'un liquide contenant un antigel.

L'invention est susceptible de diverses variantes sans sortir de la portée de l'invention.

## Revendications

1. Accumulateur de capacité frigorifique, du type comprenant un ensemble (6) de tubes accumulateurs (1) disposé dans une enceinte isothermique (10), lesdits tubes (1) étant espacés et maintenus sensiblement parallèles les uns aux autres, chaque tube (1) dudit ensemble étant fermé à ses extrémités (4, 5) et contenant un liquide primaire statique (3) capable de se transformer en glace lors d'un refroidissement par un fluide secondaire (11) frigorifique et/ou de refroidir un liquide secondaire (11), dit d'utilisation, le fluide et/ou liquide secondaire circulant entre les tubes (1), à l'extérieur de ceux-ci, la circulation dans l'enceinte (10) du produit secondaire (11) ou des deux produits secondaires (11) se faisant entre une entrée (12) et une sortie (13) situées à deux extrémités opposées de ladite enceinte, **caractérisé en ce que** (a) chaque tube est fermé à chacune de ses deux extrémités (4, 5) par une paroi intérieurement concave, (b) chaque tube réserve un espace d'expansion (1a) entre le liquide primaire (3) et sa paroi cylindrique (2), et (c) chaque tube est disposé horizontalement dans l'enceinte (10).

2. Accumulateur selon la revendication 1, **caractérisé en ce que** chaque paroi (4, 5) d'extrémité d'un tube accumulateur (1) est hémisphérique.

3. Accumulateur selon l'une quelconque des revendications 1 et 2, **caractérisé en ce que** les tubes accumulateurs (1) sont disposés dans l'enceinte (10) transversalement à la direction de circulation du produit secondaire ou des deux produits secondaires (11).

4. Accumulateur selon l'une quelconque des revendications 1 à 3, **caractérisé en ce que** les tubes accumulateurs (1) sont disposés de façon à former des nappes (7, 8, 9) superposées et espacées, les tubes étant décalés transversalement d'une nappe à l'autre de façon à contraindre le produit secondaire (11) à circuler à travers les espaces en zigzaguant autour des tubes (1) et d'une nappe à l'autre.

5. Accumulateur selon l'une quelconque des revendications 1 à 4, **caractérisé en ce que** le liquide primaire statique (3) contenu dans chaque tube (1) est soit de l'eau, soit de l'eau dosée en sels NaCl, soit une autre solution eutectique.

6. Accumulateur selon l'une quelconque des revendications 1 à 5, **caractérisé en ce que** la paroi (2) de chaque tube (1) est métallique.

7. Accumulateur selon l'une quelconque des revendications 1 à 6, **caractérisé en ce que** l'enceinte isothermique (10) est fermée de sorte que le fluide secondaire (11) frigorifique utilisé soit un gaz.

8. Accumulateur selon l'une quelconque des revendications 1 à 7 **caractérisé en ce que** chacun de ses tubes présente un diamètre d'environ 10 centimètres et une longueur de l'ordre de 1 à 6 mètres.

9. Procédé d'accumulation d'une capacité frigorifique et de restitution de ladite capacité frigorifique mettant en oeuvre l'accumulateur selon l'une quelconque des revendications 1 à 8, **caractérisé en ce qu'**il consiste à faire circuler un fluide secondaire (11) frigorifique entre les tubes (1) disposés horizontalement, à l'extérieur de ceux-ci, afin de refroidir le liquide primaire statique (3) contenu dans chaque tube et/ou à faire circuler un liquide secondaire (11), dit d'utilisation, entre lesdits tubes (1) disposés horizontalement, à l'extérieur de ceux-ci, afin de refroidir ledit liquide secondaire d'utilisation sous l'effet du liquide primaire statique.

10. Procédé selon la revendication 9, **caractérisé en ce que** la circulation entre les tubes (1) du fluide secondaire (11) frigorifique et/ou du liquide secondaire d'utilisation (11) se fait transversalement à la direction générale selon laquelle lesdits tubes s'étendent.

11. Procédé selon l'une quelconque des revendications 9 et 10, **caractérisé en ce que** le fluide secondaire (11) frigorifique et le liquide secondaire d'utilisation (11) circulant entre les tubes (1) représentent un même et unique fluide et en ce qu'un distributeur (20) règle la circulation de ce fluide unique en mode "charge", en mode "décharge" ou en mode "mixte".

## Claims

1. A refrigeration capacity accumulator of the type comprising a set (6) of accumulation tubes (1) disposed in an isothermal enclosure (10), said tubes (1) being spaced apart and maintained substantially parallel to one another, each tube (1) of said set being closed at its ends (4, 5) and containing a primary static liquid (3) capable of transforming into ice during a cooling by a secondary refrigeration fluid (11) and/or of cooling a secondary, so-called utilization liquid (11), the secondary fluid and/or secondary liquid circulating between the tubes (1), outside the latter, the circulation in the enclosure (10) of the secondary product (11) or of the two secondary products (11) occurring between an inlet (12) and an outlet (13) located at two opposite ends of said enclosure, **characterized in that** (a) each tube is closed at each of its two ends (4, 5) by an internally concave wall, (b) each tube maintains an expansion space (1a) between the primary liquid (3) and its cylindrical wall (2), and (c) each tube is disposed horizontally within the enclosure (10).

2. The accumulator according to claim 1, **characterized in that** each end wall (4, 5) of an accumulation tube (1) is hemispherical.

3. The accumulator according to either of claims 1 and 2 **characterized in that** the accumulation tubes (1) are disposed within the enclosure (10) at right angles to the direction of circulation of the secondary product or of the two secondary products (11).

4. The accumulator according to any of claims 1 through 3, **characterized in that** the accumulation tubes (1) are disposed so as to form superimposed spaced layers (7, 8, 9), the tubes being offset transversely from one layer to the next so as to force the secondary product (11) to circulate through the spaces by zigzagging around the tubes (1) and from one layer to the next.

5. The accumulator according to any of claims 1 through 4, **characterized in that** the primary static liquid (3) contained in each tube (1) is either water, or water dosed with NaCl salts, or another eutectic solution.

6. The accumulator according to any of claims 1 through 5, **characterized in that** the wall (2) of each tube (1) is metallic.

7. The accumulator according to any of claims 1 through 6, **characterized in that** the isothermal enclosure (10) is closed in such a way that the used secondary refrigeration fluid (11) can be a gas.

8. The accumulator according to any of claims 1 through 7, **characterized in that** each of its tubes has a diameter of approximately 10 centimeters and a length on the order of 1 to 6 meters.

9. A method for accumulating a refrigeration capacity and rendering said refrigeration capacity using the accumulator according to any of claims I through 8, **characterized in that** it is comprised of circulating a secondary refrigeration fluid (11) between the horizontally disposed tubes (1), outside the latter, in order to cool the primary static liquid (3) contained in each tube and/or of circulating a secondary, so-called utilization liquid (11) between said horizontally disposed tubes (1), outside the latter, in order to cool said secondary utilization liquid under the effect of the primary static liquid.

10. The method according to claim 9, **characterized in that** the circulation between the tubes (1) of the secondary refrigeration fluid (11) and/or of the secondary utilization liquid (11) takes place at right angles to the general direction in which said tubes run.

11. The method according to either of claims 9 and 10, **characterized in that** the secondary refrigeration fluid (11) and the secondary utilization liquid (11) circulating between the tubes (1) represent one and the same fluid and in that a distributor (20) regulates the circulation of this single fluid in the "charge" mode, in the "discharge" mode, or in the "mixed" mode.

## Patentansprüche

1. Kältespeicher, enthaltend eine Gruppe (6) Speicherrohre (1), die im Abstand angeordnet und im wesentlichen parallel zueinander gehalten sind, wobei jedes Rohr (1) der Gruppe an seinen Enden (4, 5) verschlossen ist und eine ruhende Primärflüssigkeit (3) enthält, die in der Lage ist, sich in Eis umzuwandeln, wenn es durch ein sekundäres Kühlfluid abgekühlt wird, und/oder eine Sekundärflüssigkeit, nämlich Gebrauchsflüssigkeit, zu kühlen, wobei das Fluid und/oder die Sekundärflüssigkeit zwischen den Rohren (1) außerhalb derselben zirkuliert und die Zirkulation in dem Behältnis (10) des Sekundärprodukts (11) oder der zwei Sekundärprodukte (11) zwischen einem Einlaß (12) und einem Auslaß (13) verläuft, die an zwei gegenüberliegenden Enden des Behältnisses angeordnet sind, **dadurch gekennzeichnet, daß**
(a) jedes Rohr an jedem seiner zwei Enden (4, 5) durch eine konkave Innenwand verschlossen ist,
(b) jedes Rohr einen Ausdehnungsraum (1a) zwischen der Primärflüssigkeit (3) und seiner zylindrischen Wand (2) freiläßt, und
(c) jedes Rohr in dem Behältnis (10) horizontal angeordnet ist.

2. Speicher nach Anspruch 1, **dadurch gekennzeichnet, daß** jede Endwand (4, 5) eines Speicherrohres (1) halbkugelig ist.

3. Speicher nach einem der Ansprüche 1 und 2, **dadurch gekennzeichnet, daß** die Speicherrohre (1) in dem Behältnis (10) quer zur Zirkulationsrichtung des Sekundärproduktes oder der zwei Sekundärprodukte (11) angeordnet sind.

4. Speicher nach einem der Ansprüche 1 bis 3, **dadurch gekennzeichnet, daß** die Speicherrohre (1) derart angeordnet sind, daß sie übereinanderliegende und voneinander beabstandete Schichten bilden, wobei die Rohre quer von einer Schicht gegenüber der anderen derart versetzt sind, daß das Sekundärprodukt (11) gezwungen ist, durch die Zwischenraume in einer zick-zack-förmig verlautenden Bahn um die Rohre (1) von einer Schicht zur anderen zu zirkulieren.

5. Speicher nach einem der Ansprüche 1 bis 4, **dadurch gekennzeichnet, daß** die ruhende Primärflüssigkeit (3), die in jedem Rohr (1) enthalten ist, Wasser, mit Kochsalz versetztes Wasser oder eine andere eutektische Lösung ist.

6. Speicher nach einem der Ansprüche 1 bis 5, **dadurch gekennzeichnet, daß** die Wand (2) eines jeden Rohres (1) metallisch ist.

7. Speicher nach einem der Ansprüche 1 bis 6, **dadurch gekennzeichnet, daß** das isothermische Behältnis (10) verschlossen ist, so daß das verwendete Kühlfluid (11) ein Gas ist.

8. Speicher nach einem der Ansprüche 1 bis 7, **dadurch gekennzeichnet, daß** jedes seiner Rohre einen Durchmesser von etwa 10 cm und eine Länge in der Größenordnung von 1 bis 6 m aufweist.

9. Verfahren zum Speichern einer Kühlmenge und zur Abgabe der Kühlmenge mit Hilfe eines Speichers nach einem der Ansprüche 1 bis 8, **dadurch gekennzeichnet, daß** es umfaßt:: Zirkulieren eines sekundären Kühlfluids (11) zwischen den horizontal angeordneten Rohren (1) außerhalb derselben, um die in jedem Rohr enthaltene primäre Kühlflüssigkeit (3) zu kühlen, und/oder Zirkulieren einer Sekundärflüssigkeit (11), nämlich Gebrauchsflüssigkeit, zwischen den horizontal angeordneten Rohren (1) außerhalb derselben, um die sekundäre Gebrauchsflüssigkeit durch die Wirkung der ruhenden Primärflüssigkeit zu kühlen.

10. Verfahren nach Anspruch 9, **dadurch gekennzeichnet, daß** die Zirkulation des Sekundärkühlfluids (11) und/oder des sekundären Gebrauchsfluids (11) zwischen den Rohren (1) quer zur Hauptrichtung verläuft, in der sich die genannten Rohre erstrecken.

11. Verfahren nach einem der Ansprüche 9 und 10, **dadurch gekennzeichnet, daß** das Sekundärkühlfluid (11) und die sekundäre Gebrauchsflüssigkeit (11), die zwischen den Rohren (1) zirkuliert, ein selbes und einziges Fluid sind, und daß ein Verteiler (20) die Zirkulation des einzigen Fluides in den Betriebsarten "Aufnehmen", "Abgeben" oder "Gemischt" regelt.
